# FASCICULE DE BREVET EUROPEEN

(11) **EP 0 522 921 B1**
(45) Date de publication et mention de la délivrance du brevet: **13.12.1995**
(21) Numéro de dépôt: 92401842.7
(22) Date de dépôt: 29.06.1992
(51) Int. Cl.: G01K 13/06

(54) **Rouleau de support et/ou d'entraînement de produits plats, comportant un capteur**
Zufuhr- oder Stützwalze für flache Gegenstände mit einem Sensor
Drive or support roller for flat articles including a sensor

(30) Priorité: 10.07.1991 FR 9108698
(43) Date de publication de la demande: 13.01.1993
(73) Titulaire: SOLLAC, 92800 Puteaux (FR)
(72) Inventeur: Burlion, Robert, F-57100 Thionville (FR); Deutsch, Christian, F-57000 Metz (FR); Schmit, Jean-Paul, F-57300 Hagondange (FR)
(74) Mandataire: Polus, Camille

(56) Documents cités:
- EP-A- 0 454 301
- INSTRUMENT PRACTICE vol. 27, no. 9, Septembre 1970, page 632 'TECHNOLOGY APPLIED. STRIP PROFILE MEASUREMENT'

## Description

La présente invention concerne un rouleau de support et/ou d'entraînement de produits plats ou de tôles comportant un ou plusieurs capteurs de température constitués de thermocouples.

Au cours de la fabrication de la tôle, on contrôle l'état de celle-ci en effectuant des mesures diverses, par exemple des mesures de température.

Il est connu d'effectuer ces mesures en incorporant au moins un thermocouple à un rouleau de support ou d'entraînement de la tôle.

Pour transmettre le signal issu directement du thermocouple à un appareil de mesure fixe disposé à l'extérieur du rouleau, il n'est pas possible d'utiliser des systèmes à bagues tournantes et collecteurs. En effet ce signal fourni par le thermocouple est une tension de faible valeur, de l'ordre du millivolt, et si on tentait de transmettre ce signal par un jeu de bagues et collecteur, le signal serait excessivement perturbé par les pollutions électriques créées par l'environnement et les variations de résistance dans le circuit dues à l'imperfection des contacts entre bagues tournantes et collecteurs. La mesure qui en résulterait manquerait totalement de précision.

Pour résoudre ce problème il a déjà été proposé, par exemple, dans le document US 3824857, de convertir dans la partie tournante, le signal en millivolts issu du thermocouple en un signal modulé en fréquence, et de transmettre ce signal modulé en fréquence à la partie fixe par des transformateurs tournants ou par onde radio.

Toutefois ces systèmes sont sophistiqués, et coûteux et ne sont pas totalement immunisés contre d'éventuelles perturbations extérieures du signal.

L'invention a pour but de transmettre à la partie fixe du circuit de mesure un signal précis, insensible aux pollutions électriques, en utilisant des moyens simples et donc peu coûteux.

A cet effet, l'invention a pour objet un rouleau de support et/ou d'entraînement de produits plats ou de tôles comportant au moins un thermocouple caractérisé en ce qu'il comporte des moyens de conversion constitués, pour chaque thermocouple, par un convertisseur transformant le signal en tension fourni par le thermocouple en un courant contraint d'intensité indépendante de la résistance du circuit dans lequel circule ce courant, et un jeu de bagues tournantes et collecteurs fixes dont les bagues sont reliées aux sorties desdits convertisseurs.

Grâce au dispositif selon l'invention, le signal, récupéré sur les collecteurs fixes et transmis au circuit de mesure fixe par rapport au rouleau est un signal en intensité, de plusieurs milliampères, dont la valeur est indépendante des perturbations créées par le système bagues-collecteurs, et qui reflète précisément le signal en tension issu du thermocouple.

Selon d'autres caractéristiques de l'invention :
- un connecteur est interposé entre chaque thermocouple et le convertisseur associé ;
- le rouleau comporte des moyens de refroidissement à air des moyens de conversion ;
- les moyens de conversion sont disposés à l'intérieur d'un boîtier et lesdits moyens de refroidissement comprennent un orifice d'arrivée d'air de refroidissement ménagé à travers la paroi du boîtier et des supports et châssis annulaires au voisinage de l'axe desquels sont fixés les moyens de conversion, qui délimitent un trajet de circulation de l'air dans le boîtier.

L'invention est également appliquée à un rouleau comprenant un corps cylindrique creux, dont la surface externe coopère par contact avec la tôle, et au moins un thermocouple, disposé à l'intérieur du corps cylindrique, dont une extrémité ou soudure chaude est logée dans la paroi du corps cylindrique au voisinage de sa surface externe, caractérisé en ce que le thermocouple est enfilé en étant amovible dans un tube de guidage qui s'étend à l'intérieur du corps cylindrique creux et dont une extrémité débouche dans un trou borgne de la paroi du corps cylindrique formant logement pour la soudure chaude.

Suivant d'autres caractéristiques de ce rouleau:
- l'extrémité du tube de guidage par où débouche la soudure chaude est fixée sur la surface interne du corps cylindrique au moyen d'un organe de liaison dont une première extrémité ou embase est soudée sur la surface interne du corps cylindrique et une seconde extrémité ou collier est soudée sur le tube de guidage ;
- les caractéristiques de dilatation du matériau de l'organe de liaison sont sensiblement équivalentes à celles du matériau du cylindrique ;
- l'extrémité du tube de guidage par où débouche la soudure chaude et le trou borgne formant logement pour la soudure chaude sont sensiblement perpendiculaires à la paroi du corps cylindrique creux ;
- le tube de guidage est monté avec jeu, à l'intérieur du rouleau, dans des supports et cavaliers solidaires du rouleau ; et
- des moyens d'étanchéité isolent les gaz contenus dans le corps cylindrique creux des moyens de conversion.

L'invention a également pour objet un four de recuit pour le traitement en continu de produits plats ou de tôle utilisant au moins un rouleau selon l'invention.

Un exemple de réalisation de l'invention va être décrit ci-dessous en se référant aux dessins annexés dans lesquels :
- la figure 1 est une vue partielle schématique en coupe longitudinale d'un rouleau d'entraînement de tôle ;
- la figure 2 est une vue de détail en coupe de l'ensemble de la figure 1 entouré en traits mixtes et désigné par 2 ;
- la figure 3 est une vue de détail de la figure 1 montrant un premier support d'un tube de guidage;
- la figure 4 est une vue en coupe selon la ligne 4-4 de la figure 3 ;
- la figure 5 est une vue de détail de la figure 1 montrant un deuxième support du tube de guidage ;
- la figure 6 est une vue en coupe selon la ligne 6-6 de la figure 5 ;
- la figure 7 est une vue en coupe transversale du tube de guidage disposé dans un cavalier ;
- la figure 8 est une vue en coupe transversale du tube de guidage disposé dans un support et un cavalier;
- la figure 9 est une vue en coupe longitudinale partielle d'un dispositif électromécanique disposé à une extrémité du rouleau.

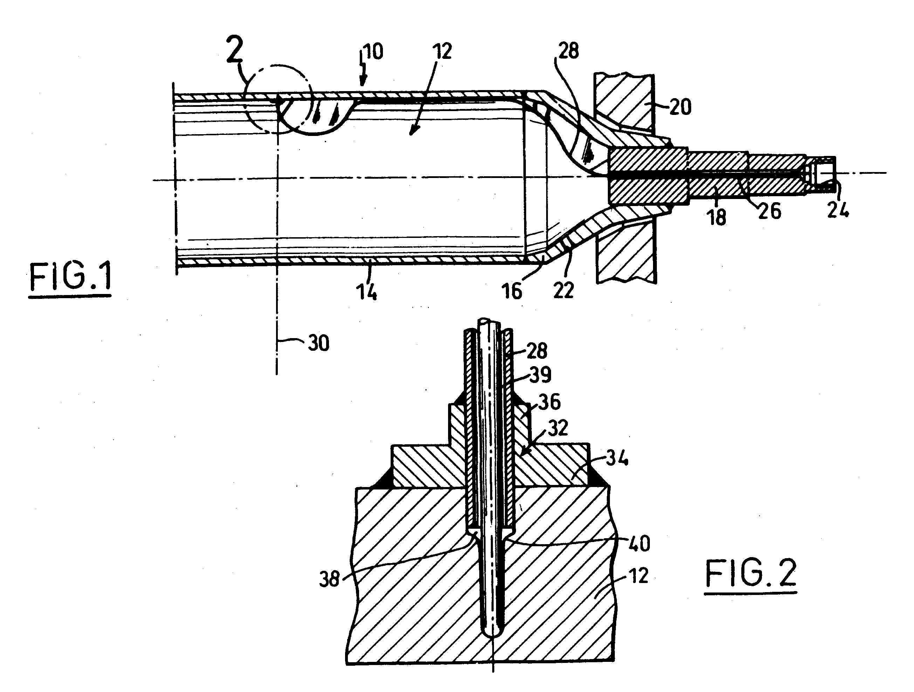

On voit à la figure 1 un rouleau d'entraînement de tôle 10 utilisé dans un four de recuit d'une installation de traitement en continu. Ce rouleau 10 comporte un corps cylindrique creux 12 comprenant un cylindre droit 14 fermé à ses deux extrémités respectivement par deux bouchons 16 formant un col. Pour des raisons de symétrie on a représenté un seul des bouchons 16, placé à droite du cylindre 14 en considérant la figure 1. Le cylindre 14 a, dans cet exemple, une longueur de 1800 mm, un diamètre de 600 mm et une paroi de 20 mm d'épaisseur. La surface externe de sa paroi coopère par contact avec la tôle. Les bouchons 16 sont respectivement soudés sur chaque extrémité du cylindre 14, au niveau de leur diamètre le plus grand, et comportent un arbre 18 emmanché et soudé, au niveau de leur diamètre le plus petit. Les bouchons 16 traversent une paroi 20 délimitant l'enceinte du four. Les paliers portant les arbres 18 et les organes de commande et d'entraînement du rouleau sont disposés à l'extérieur du four et ne sont pas représentés sur les figures. Des orifices 22 ménagés à peu près perpendiculairement aux parois de chaque bouchon 16 font communiquer l'intérieur du cylindre creux 12 avec l'atmosphère du four pour homogénéiser les gaz chauds présents dans le rouleau 10 et dans le four.

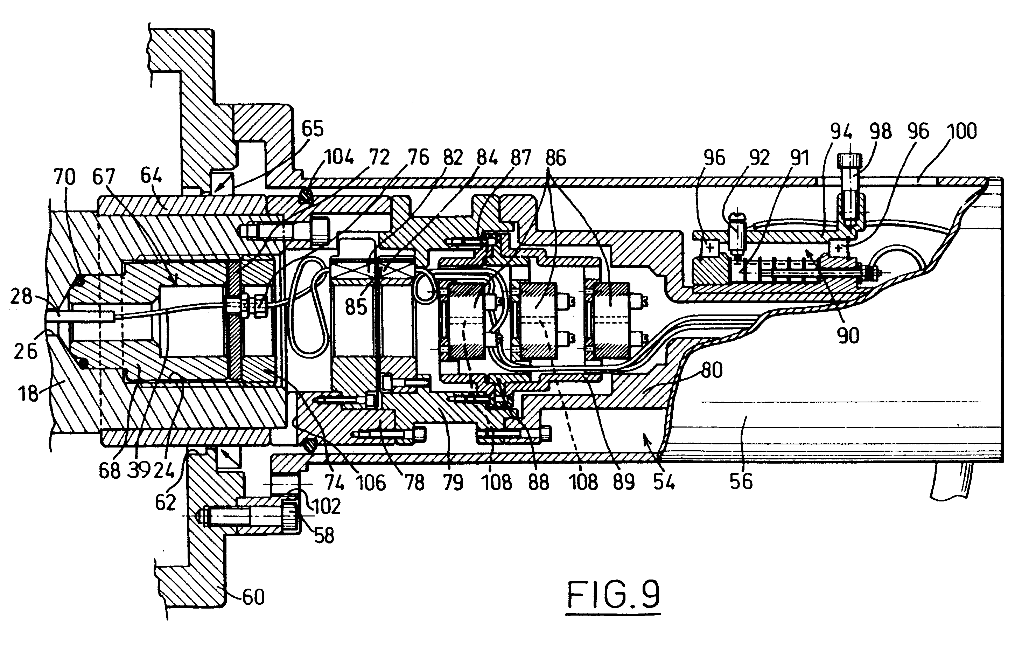

L'arbre 18 représenté à la figure 1 est étagé et délimite des portions cylindriques de diamètre décroissant en direction de l'extrémité libre de l'arbre. Cette dernière comporte un trou axial étagé 24 et un dispositif électromécanique qui est représenté à la figure 9 et qui sera décrit ultérieurement.

L'arbre 18 est traversé suivant son axe par un conduit 26 où est logé partiellement un tube de guidage 28 destiné à recevoir un capteur de température qui est un thermocouple. Le tube de guidage 28 s'étend du trou étagé 24 de l'arbre 18 jusqu'à la paroi du corps cylindrique 12 où il est fixé à peu près au niveau du plan transversal médian 30 du rouleau, représenté en traits mixtes à la figure 1. Dans l'exemple décrit, le tube de guidage 28 est en acier inoxydable. Il a un diamètre de 6 mm et sa paroi a une épaisseur de 1 mm. Les moyens de positionnement du tube de guidage à l'intérieur du corps cylindrique 12 seront décrits plus en détail ultérieurement.

On voit à la figure 2 comment l'extrémité du tube de guidage 28 est fixée perpendiculairement à la paroi du corps cylindrique 12, au moyen d'un organe de liaison 32. Cet organe de liaison est de forme générale cylindrique. Il est constitué de deux portions de cylindre 34,36, l'une de grand diamètre appelée embase 34, soudée sur la surface interne du corps cylindrique 12, et l'autre de petit diamètre, appelée collier 36, soudée sur le tube de guidage 28. L'organe de liaison 32 est préférentiellement constitué d'un matériau ayant le même coefficient de dilatation que la paroi du corps cylindrique 12 afin d'optimiser la solidité de la fixation de cet organe de liaison sur la paroi du corps cylindrique 12, et d'éviter, dans celle-ci, l'apparition de contraintes qui seraient dues à des dilatations différentielles.

L'extrémité du tube de guidage 28 traverse l'organe de liaison 32 et débouche dans un trou borgne 38 ménagé dans la paroi du corps cylindrique 12, perpendiculairement à celle-ci. Dans l'exemple illustré, le fond du trou borgne 38 est à 3 mm de la surface externe du corps cylindrique 12. Cependant, on peut réduire cette distance à 1 mm en utilisant un appareil de mesure d'épaisseur précis pour l'usinage du trou borgne. En considérant la figure 2, on voit que le haut du trou borgne 38 a un diamètre intérieur adapté pour recevoir l'extrémité du tube de guidage 28, et le bas du trou borgne à un diamètre intérieur plus petit, inférieur au diamètre du tube de guidage 28, adapté pour recevoir l'extrémité d'un thermocouple 39 constituant la soudure chaude. Un épaulement 40 qui constitue la limite entre les deux parties du trou borgne 38 dont les diamètres intérieurs diffèrent a une forme arrondie afin de faciliter la mise en place de l'extrémité du thermocouple dans le fond du trou borgne 38, et d'éviter toute amorce de rupture.

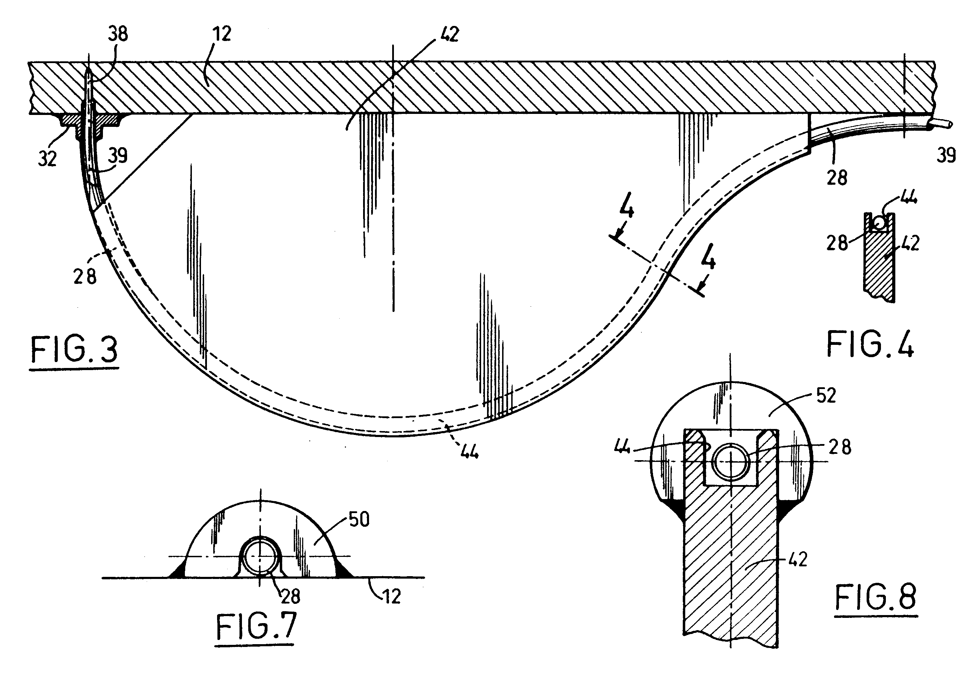

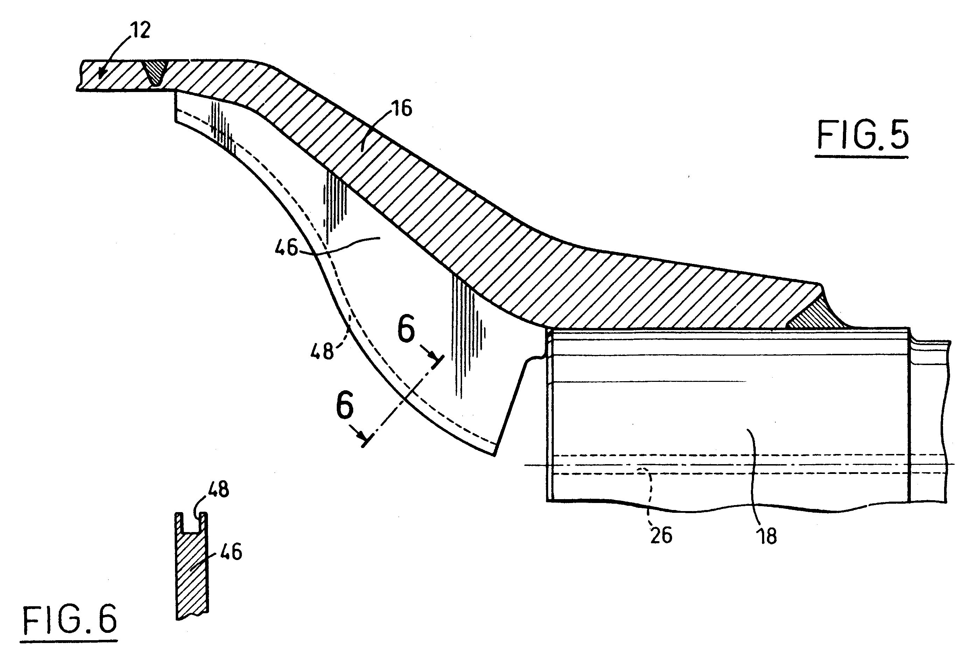

Les figures 3 à 8 montrent plus en détail le montage du tube de guidage à l'intérieur du rouleau 10. La figure 3 montre comment le tube de guidage 28 est positionné dans le corps cylindrique 12 au moyen d'un premier support 42 en forme de plaque. Ce support 42 est disposé dans un plan longitudinal du corps cylindrique creux 12, en étant fixé par un bord longitudinal sur la surface interne du corps cylindrique creux 12. Une gorge 44 est ménagée dans le bord libre ou tranche du support 42. La section de la gorge 44 est montrée à la figure 4. Les dimensions en largeur et en profondeur de la gorge 44 sont adaptées pour recevoir avec jeu le tube de guidage 28. Le contour de la tranche du support 42 où est ménagée la gorge 44 délimite des formes courbes de manière à donner au tube de guidage 28 des orientations prédéterminées. Ainsi, en considérant la figure 3, l'extrémité du tube de guidage débouche de la gorge 44, à gauche du support 42, perpendiculairement à la paroi du corps cylindrique 12. De même, le tube de guidage 28 débouche de la gorge 44, à droite du support 42, à peu près parallèlement par rapport à la paroi du corps cylindrique 12.

On voit à la figure 5 un second support 46 pour le tube de guidage 28, en forme de plaque, qui est disposé, comme le précédent, dans un plan longitudinal du corps cylindrique 12. Ce support 46 est fixé par un bord sur la paroi interne du bouchon 16 du corps cylindrique 12. Comme pour le support 44 décrit précédemment, une gorge 48 est ménagée dans le bord libre ou tranche du support 46. La section de la gorge 48 est montrée à la figure 6. Le contour de la tranche du support 46 délimite des formes courbes permettant de donner des orientations prédéterminées au tube de guidage 28 qui est reçu avec jeu dans la gorge 48. Ainsi, en considérant la figure 5, bien que le tube de guidage 28 ne soit pas représenté sur cette figure, on comprend qu'à gauche du support 46, le tube de guidage 28 débouche de la gorge 48 en étant à peu près parallèle à la paroi du corps cylindrique 12, et, qu'à droite du support 46, le tube de guidage 28 débouche de la gorge 48 en étant à peu près dans l'axe du conduit 26 de l'arbre 18.

Comme on a déjà pu le voir à la figure 1, le tube de guidage 28 s'étend entre les deux supports 42,46 en longeant la paroi du corps cylindrique 12. La figure 7 montre un des cavaliers 50, dits cavaliers à branches courtes, maintenant le tube de guidage 28 contre la paroi du corps cylindrique 12 entre les deux supports 42, 46. Ces cavaliers 50 sont fixés sur la surface interne de la paroi du corps cylindrique 12 par soudage. Le tube de guidage 28 est maintenu étroitement entre le cavalier 50 et la surface interne de la paroi du corps cylindrique 12.

On voit à la figure 8 un des cavaliers 52, dits cavaliers à branches longues, disposés transversalement à la gorge 44 du support 42. Des cavaliers à branches longues 52 sont également disposés sur le support 46 d'une façon analogue à celle montrée à la figure 8. On voit que, contrairement aux cavaliers à branches courtes 50 montrés à la figure 7, les cavaliers à branches longues 52 maintiennent le tube de guidage 28 avec jeu dans la gorge 44. Le tube de guidage 28 est donc maintenu avec jeu entre les parois des gorges 44,48 et les cavaliers 52 pour permettre des petits déplacements de celui-ci dus à sa dilatation.

Le thermocouple est disposé à l'intérieur du rouleau 10 en l'enfilant dans le tube de guidage 28 une fois que le rouleau est mis en place dans le four. Cependant, l'usinage du trou borgne 38 où est reçue la soudure chaude du thermocouple et la fixation du tube de guidage 28 à l'intérieur du corps cylindrique 12 doivent être réalisés avant de fixer entre eux les différents éléments constituant le rouleau 10, notamment le cylindre droit 14, les bouchons d'extrémité 16 et les arbres 18.

On a représenté sur les figures un seul tube de guidage 28 disposé dans le rouleau 10. Il va de soi que d'autres tubes de guidage 28 pour thermocouples peuvent être placés de façon analogue dans le rouleau 10. De préférence, on place dans le rouleau 10 trois thermocouples disposés respectivement dans trois tubes de guidage 28. Ceci permet d'équilibrer dynamiquement le rouleau 10 qui est entraîné en rotation. Les soudures chaudes des thermocouples sont disposées par exemple dans le plan transversal médian du rouleau 10. Mais elles peuvent être disposées également en tout point de la paroi du rouleau.

Le rouleau 10 étant mis en place dans le four, on enfile le thermocouple dans son tube de guidage 28 par l'extrémité de ce dernier qui débouche dans le trou étagé 24 de l'arbre 18. On pousse le corps du thermocouple pour placer la soudure chaude au fond du trou borgne 38 de la paroi du rouleau, à l'autre extrémité du tube de guidage 28.

On voit à la figure 9 l'extrémité de l'arbre 18 sur laquelle on a fixé un dispositif électromécanique 54 relié aux thermocouples. Le dispositif 54 est disposé à l'intérieur d'un boîtier 56 fixé par des vis 58 sur un couvercle 60 solidaire d'un palier fixe, non représenté, portant l'arbre 18. L'extrémité de cet arbre 18 traverse le couvercle 60 au niveau d'une ouverture axiale 62 de ce couvercle. Une bague d'usure 64 est emmanchée sur l'extrémité de l'arbre 18 au niveau de l'ouverture 62 du couvercle 60. Un joint à lèvre 65 assure l'étanchéité entre la bague d'usure 64 et le couvercle 60.

On a représenté à la figure 9 un seul tube de guidage 28 débouchant du conduit 26 dans le trou étagé 24 et un seul thermocouple 39 qui est logé dans le tube de guidage 28. Le thermocouple 39 est par exemple du type Chromel Alumel. Comme nous l'avons déjà précisé, on prévoit de préférence trois thermocouples et donc trois tubes de guidage 28 dans le rouleau 10. Leur montage se fait de façon analogue à ce qui a été décrit précédemment.

Comme on a déjà pu le voir à la figure 1, le conduit 26 met en communication l'intérieur du cylindre creux 12 et le trou étagé 24. Par conséquent, les gaz chauds qui sont à l'intérieur du corps cylindrique 12 peuvent atteindre le trou étagé 24 en passant par le conduit 26. Des moyens d'étanchéité 67 isolent le dispositif électromécanique 54 des gaz chauds contenus dans le four et le rouleau 10. Ces moyens d'étanchéité 67 comprennent une entretoise annulaire 68 logée dans le trou étagé 24, un joint d'étanchéité torique 70 disposé entre le fond du trou étagé 24 et une première extrémité de l'entretoise 68, et un disque d'étanchéité 72 disposé entre la seconde extrémité de l'entretoise 68 et un écrou de serrage 74 vissé dans le trou étagé 24. Le thermocouple 39 est enfilé dans un raccord ajustable 76, traversant le disque d'étanchéité 72. Le thermocouple 39 est coincé par serrage dans le raccord 76 qui le maintient ainsi enfoncé dans le tube de guidage 28.

On décrit maintenant le dispositif électromécanique 54. Celui-ci comporte un ensemble de supports annulaires 78,79,80, juxtaposés entre-eux et fixés solidairement à l'axe 18, au moyen de vis. Les supports 78,79, proches de l'arbre 18, comportent respectivement les deux éléments complémentaires 82,84 d'un connecteur miniature 85, par exemple du type fabriqué par la société Thermo Electric sous la référence CNN-21 200.KX. L'élément de connecteur 82 est relié au thermocouple 39. L'élément de connecteur 84 est relié à des moyens de conversion du signal délivré par le thermocouple, ou convertisseur 86. Le rôle du convertisseur 86 sera précisé ultérieurement. On voit sur la figure 9 que le dispositif électromécanique 54 comporte deux autres convertisseurs 86 identiques, pour deux autres thermocouples, dont on n'a pas représenté les fils électriques de raccordement ni les connecteurs correspondants. Les trois convertisseurs 86 sont respectivement disposés sur des châssis annulaires 87,88,89 fixés sur le support 79 au moyen de vis. Les convertisseurs 86 sont placés dans l'axe des châssis annulaires.

La sortie des convertisseurs 86 est raccordée à un dispositif 90 à bagues 91 et collecteurs 92 de type connu. Les bagues 91 sont fixées sur le support 80, solidaire de l'arbre 18. Les collecteurs 92, dont un seul est représenté à la figure 9, sont solidaires d'un support 94 porté par des roulements à billes 96 agencés entre ce même support 94 et le support de bagues 80. Le support de collecteurs 94 est immobilisé en rotation au moyen d'une vis 98 qui est vissée dans celui-ci et dont le corps traverse une lumière oblongue 100 du boîtier 56. Cette lumière 100 permet un déplacement de la vis d'immobilisation 98 suivant l'axe du rouleau, à la suite de la dilation du rouleau 10.

Les convertisseurs 86 convertissent les signaux en tension (0 à 18 mV) délivrés par les thermocouples, préalablement à leur transmission dans le dispositif 90 à bagues et collecteurs, en courants contraints de valeur uniquement dépendante de celles desdites tensions, et donc notamment indépendante de toutes variations de résistance (résistances de ligne ou résistances de contact) des circuits de sortie des convertisseurs. Dans l'exemple décrit, les convertisseurs délivrent en sortie un courant compris entre 4 et 20 mA correspondant linéairement à des températures de 0 à 1000°C. De cette manière, le courant de sortie des convertisseurs est insensible aux pollutions électriques produites par les contacts entre les bagues et les collecteurs. L'ensemble bagues-collecteurs peut être de ce fait de construction courante, sans qu'il soit nécessaire de recourir à un ensemble de collecteurs sophistiqués et donc coûteux. On obtient ainsi des mesures de température précises. Par ailleurs, les sorties des convertisseurs en 4-20 mA sont normalisées et par conséquent les données fournies par les thermocouples peuvent être envoyées à un système d'acquisition et de traitement de données numériques standard, pour la régulation du four. Le signal de mesure est directement exploitable à la sortie du jeu de collecteurs, ou peut être envoyé sur une simple paire téléphonique, sans autre traitement électronique, à plusieurs récepteurs, si besoin est, et à grande distance.

Grâce au connecteur 85 relié à chaque thermocouple 39, l'ensemble comprenant les convertisseurs 86 et le dispositif 90 à bagues et collecteurs est facilement démontable sans qu'il soit nécessaire de déplacer les thermocouples 39 du rouleau 10.

On décrit maintenant les moyens de refroidissement du dispositif électromécanique 54, notamment des convertisseurs 86 dont le fonctionnement requiert des températures modérées. Un orifice 102 ménagé dans le boîtier 56 au voisinage de l'extrémité de l'arbre 18 constitue une arrivée d'air de refroidissement. L'air est amené jusqu'à cet orifice d'arrivée d'air 102 par un dispositif d'alimentation de type connu, non représenté sur les figures. Dans le boîtier 56, l'air est canalisé par un joint annulaire d'étanchéité 104 disposé entre le support 78 et le boîtier 56 vers un conduit radial 106 ménagé dans le support de connecteur 78. Les formes annulaires des supports 78,79,80 et des châssis de convertisseurs 87,88,89 assurent une circulation de l'air de refroidissement suivant un trajet à peu près axial dans le boîtier 56. Le refroidissement des convertisseurs 86 est optimisé par des orifices axiaux 108 ménagés à travers ceux-ci.

Pour remplacer un thermocouple, il suffit de démonter le boîtier 56 et le dispositif électromécanique 54, puis d'extraire le thermocouple en tirant sur celui-ci au niveau du raccord 76. La mise en place d'un autre thermocouple s'effectue en enfilant celui-ci dans le raccord 76 et dans le tube de guidage 28 dont une extrémité est voisine du raccord 76.

Par ailleurs, les moyens de conversion peuvent être incorporés à n'importe quel type de rouleau, portant ou entraînant la tôle, au cours d'un processus de fabrication de la tôle. Ces rouleaux peuvent être disposés ailleurs que dans le four de recuit, par exemple en aval ou en amont de celui-ci dans le processus de fabrication des produits plats.

## Revendications

1. Rouleau de support et/ou d'entraînement de produits plats ou de tôles comportant au moins un thermocouple (39) caractérisé en ce qu'il comporte des moyens de conversion (86) constitués, pour chaque thermocouple (39), par un convertisseur (86) transformant le signal en tension fourni par le thermocouple en un courant contraint d'intensité indépendante de la résistance du circuit dans lequel circule ce courant, et un jeu (90) de bagues (91) tournantes et collecteurs (92) fixes dont les bagues sont reliées aux sorties desdits convertisseurs (86).

2. Rouleau selon la revendication 1, caractérisé en ce qu'un connecteur (85) est interposé entre le thermocouple (39) et les moyens de conversion (86) du signal.

3. Rouleau selon la revendication 1, caractérisé en ce que le rouleau comporte des moyens de refroidissement à air des moyens de conversion (86).

4. Rouleau selon la revendication 3, caractérisé en ce que les moyens de conversion (86) sont disposés à l'intérieur d'un boîtier (56) et en ce que lesdits moyens de refroidissement comprennent un orifice d'arrivée d'air de refroidissement (102) ménagé à travers la paroi du boîtier (56) et des supports (78,79,80) et châssis (87,88,89) annulaires au voisinage de l'axe desquels sont fixés les moyens de conversion (86), qui délimitent un trajet de circulation de l'air dans le boîtier (56).

5. Rouleau selon l'une quelconque des revendications précédentes comprenant un corps cylindrique creux (12), dont la surface externe coopère par contact avec la tôle, et au moins un capteur qui est un thermocouple (39), disposé à l'intérieur du corps cylindrique (12), dont une extrémité ou soudure chaude est logée dans la paroi du corps cylindrique (12) au voisinage de sa surface externe, caractérisé en ce que le thermocouple (39) est enfilé en étant amovible dans un tube de guidage (28) qui s'étend à l'intérieur du corps cylindrique creux (12) et dont une extrémité débouche dans un trou borgne (38) de la paroi du corps cylindrique formant logement pour la soudure chaude.

6. Rouleau selon la revendication 5, caractérisé en ce que l'extrémité du tube de guidage (28) par où débouche la soudure chaude est fixée sur la surface interne du corps cylindrique (12) au moyen d'un organe de liaison (32) dont une première extrémité ou embase (34) est soudée sur la surface interne du corps cylindrique (12) et une seconde extrémité ou collier (36) est soudée sur le tube de guidage (28).

7. Rouleau selon la revendication 6, caractérisé en ce que les caractéristiques de dilatation du matériau de l'organe de liaison (32) sont sensiblement équivalentes à celles du matériau du cylindrique (12).

8. Rouleau selon la revendication 5, caractérisé en ce que l'extrémité du tube de guidage (28) par où débouche la soudure chaude et le trou borgne (38) formant logement pour la soudure chaude sont sensiblement perpendiculaires à la paroi du corps cylindrique creux (12).

9. Rouleau selon la revendication 5, caractérisé en ce que le tube de guidage (28) est monté avec jeu, à l'intérieur du rouleau (10), dans des supports (42,46) et cavaliers (50,52) solidaires du rouleau.

10. Rouleau selon la revendication 5, caractérisé en ce que des moyens d'étanchéité (67) isolent les gaz contenus dans le corps cylindrique creux (12) des moyens de conversion (86).

11. Four de recuit pour le traitement en continu de produits plats ou de tôle, caractérisé en ce qu'il comporte au moins un rouleau selon l'une quelconque des revendications précédentes.

## Claims

1. Support and/or drive roller for flat products or sheet metal, comprising at least one thermocouple (39), characterised in that it comprises conversion means (86) consisting, for each thermocouple (39), of a converter (86) which converts the voltage signal supplied by the thermocouple into a forced current the intensity of which is independent of the resistance of the circuit in which the current flows, and a set (90) of rotating rings (91) and fixed collecting rings (92) the rings of which are connected to the outputs from said converters (86).

2. Roller according to claim 1, characterised in that a connector (85) is interposed between the thermocouple (39) and the means (86) for converting the signal.

3. Roller according to claim 1, characterised in that the roller comprises air cooling means for the conversion means (86).

4. Roller according to claim 3, characterised in that the conversion means (86) are arranged inside a casing (56) and in that said cooling means comprise a cooling air intake port (102) formed through the wall of the casing (56) and annular supports (78, 79, 80) and frames (87, 88, 89), the conversion means (86) being fixed close to the axis thereof, said supports and frames defining a path for the circulation of air in the casing (56).

5. Roller according to any one of the preceding claims comprising a hollow cylindrical body (12) the outer surface of which cooperates by contact with the sheet metal, and at least one sensor which is a thermocouple (39), arranged inside the cylindrical body (12), one end, or hot weld, of which is housed in the wall of the cylindrical body (12) close to its outer surface, characterised in that the thermocouple (39) is removably threaded through a guide tube (28) which extends inside the hollow cylindrical body (12) and one end of which opens into a blind hole (38) in the wall of the cylindrical body forming a housing for the hot weld.

6. Roller according to claim 5, characterised in that the end of the guide tube (28) where the hot weld opens out is fixed to the inner surface of the cylindrical body (12) by means of a connecting member (32), a first end, or base, (34) of which is welded to the inner surface of the cylindrical body (12) whilst a second end or collar (36) is welded to the guide tube (28).

7. Roller according to claim 6, characterised in that the expansion characteristics of the material of the connecting member (32) are substantially equivalent to those of the material of the cylinder (12).

8. Roller according to claim 5, characterised in that the end of the guide tube (28) where the hot weld opens out and the blind hole (38) forming the housing for the hot weld are substantially perpendicular to the wall of the hollow cylindrical body (12).

9. Roller according to claim 5, characterised in that the guide tube (28) is mounted with play, inside the roller (10), in supports (42, 46) and riders (50, 52) integral with the roller.

10. Roller according to claim 5, characterised in that the sealing means (67) insulate the gases contained in the hollow cylindrical body (12) from the conversion means (86).

11. Annealing furnace for the continuous treament of flat products or sheet metal, characterised in that it comprises at least one roller according to any one of the preceding claims.

## Patentansprüche

1. Walze zum Stützen und/oder Mitnehmen von flachen Gegenständen oder Blechen, mit wenigstens einem Thermoelement (39), dadurch gekennzeichnet, daß sie Wandlereinrichtungen (86), die für jedes Thermoelement (39) aus einem Wandler (86) bestehen, der das von dem Thermoelement gelieferte Spannungssignal in einen Zwangsstrom mit einer Intensität unabhängig vom Widerstand der Schaltung, in der dieser Strom fließt, umwandelt, und eine Gruppe (90) von sich drehenden Ringen (91) und festen Kollektoren (92) aufweist, wobei die Ringe mit den Ausgängen der Wandler (86) verbunden sind.

2. Walze nach Anspruch 1, dadurch gekennzeichnet, daß ein Verbinder (85) zwischen das Thermoelement (39) und die Wandlereinrichtungen (86) des Signals geschaltet ist.

3. Walze nach Anspruch 1, dadurch gekennzeichnet, daß die Walze Kühllufteinrichtungen für die Wandlereinrichtungen (86) umfaßt.

4. Walze nach Anspruch 3, dadurch gekennzeichnet, daß die Wandlereinrichtungen (86) im Inneren eines Gehäuses (56) angeordnet sind und daß die Kühleinrichtungen eine Öffnung (102) für den Kühllufteinlaß aufweisen, die durch die Wand des Gehäuses (56) vorgesehen ist, und ringförmige Träger (78, 79, 80) und Rahmen (87, 88, 89) in der Nähe der Achse derselben an den Wandlereinrichtungen (86) befestigt sind, die einen Umlaufweg für die Luft in dem Gehäuse (56) begrenzen.

5. Walze nach einem der vorangehenden Ansprüche, mit einem hohlzylindrischen Körper (12), dessen Außenfläche durch Kontakt mit dem Blech wirkt, und wenigstens einem Aufnehmer, der ein Thermoelement (39) ist, im Inneren des zylindrischen Körpers (12) angeordnet, wobei eines seiner Enden oder eine Heißkontaktstelle in der Wand des zylindrischen Körpers (12) in der Nähe seiner Außenfläche untergebracht ist, dadurch gekennzeichnet, daß das Thermoelement (39) unbewegbar in ein Führungsrohr (28) eingesetzt ist, das sich im Inneren des hohlzylindrischen Körpers (12) erstreckt und dessen eines Ende in einem Blindloch (38) der Wand des zylindrischen Körpers mündet, das eine Aufnehmung für die Heißkontaktstelle bildet.

6. Walze nach Anspruch 5, dadurch gekennzeichnet, daß das Ende des Eührungsrohres (28), von dem ab die Heißkontaktstelle mündet, auf der Innenfläche des zylindrischen Körpers (12) mittels eines Verbindungselementes (32) befestigt ist, dessen eines Ende oder Ansatz (34) auf die Innenfläche des zylindrischen Körpers (12) geschweißt ist und dessen zweites Ende oder Ringflansch (36) auf das Führungsrohr (28) geschweißt ist.

7. Walze nach Anspruch 6, dadurch gekennzeichnet, daß die Wärmeausdehnungseigenschaften des Materials des Verbindungselementes (32) im wesentlichen äquivalent denjenigen des Materials des Zylinders (12) sind.

8. Walze nach Anspruch 5, dadurch gekennzeichnet, daß das Ende des Führungsrohres (28), von dem die Heißkontaktstelle mündet, und das Blindloch (38), das die Aufnehmung für die Heißkontaktstelle bildet, im wesentlichen senkrecht zu der Wand des hohlzylindrischen Körpers (12) liegen.

9. Walze nach Anspruch 5, dadurch gekennzeichnet, daß das Führungsrohr (28) mit Spiel angebracht ist, im Inneren der Walze (10), in Trägern (42, 46) und Reitern (50, 52), die einstückig mit der Walze sind.

10. Walze nach Anspruch 5, dadurch gekennzeichnet, daß Dichtungseinrichtungen (67) die Gase, die in dem hohlzylindrischen Körper (12) enthalten sind, von den Wandlereinrichtungen (86) isolieren.

11. Glühofen für die kontinuierliche Behandlung von flachen Gegenständen oder Blechen, dadurch gekennzeichnet, daß er wenigstens eine Walze nach einem der vorangehenden Ansprüche aufweist.
